# EUROPÄISCHE PATENTSCHRIFT

(11) **EP 0 708 018 B1**
(45) Veröffentlichungstag und Bekanntmachung des Hinweises auf die Patenterteilung: **12.08.1998**
(21) Anmeldenummer: 95115836.9
(22) Anmeldetag: 07.10.1995
(51) Int. Cl.: B64D 11/00

(54) **Trennwand für die Kabine eines Passagierflugzeuges**
Partition wall for the cabin of a passengers aircraft
Cloison mobile pour la cabine d'un avion de passager

(30) Priorität: 18.10.1994 DE 4437133
(43) Veröffentlichungstag der Anmeldung: 24.04.1996
(73) Patentinhaber: Daimler-Benz Aerospace Airbus Gesellschaft mit beschränkter Haftung, 21129 Hamburg (DE)
(72) Erfinder: Franke, Lutz, D-21077 Hamburg (DE)
(74) Vertreter: Hansmann, Dierk, Dipl.-Ing.

(56) Entgegenhaltungen:
- WO-A-93/01088
- US-A- 3 738 497

## Beschreibung

Die Erfindung bezieht sich auf eine Trennwand für die Kabine eines Passagierflugzeuges. Derartige Trennwände dienen im wesentlichen der optischen Abtrennung unterschiedlicher Kabinenbereiche und bestehen im Prinzip aus entsprechend zugeschnittenen relativ dünnwandigen Platten eines geeigneten Materials, wobei die Ränder der Trennwände mit einem Kantenprofil versehen sind. Eine entsprechende Trennwand, die außer der besagten Abtrennung von Kabinenteilen eine zusätzliche Aufgabe löst, ist durch die WO 93/01088 bekannt. Die hier entnehmbare Trennwand besteht aus Teilwänden und weist einen horizontalen Versatz auf. Außerdem sind die seitlichen Umrißkanten gegenüber dem Sockelbereich zurückgesetzt. Die Trennwand ist am Fußboden und an der Decke der Kabine befestigt und ist in eingebautem Zustand gegenüber der Senkrechten so geneigt, daß die Rückenlehne eines vor der Trennwand angeordneten Sitzes voll geneigt werden kann. Dabei besteht die genannte Zusatzaufgabe darin sicherzustellen, daß hinter der Trennwand sitzende Passagiere bei einem Unfall vor schweren Kopfverletzungen geschützt werden. Zur Verwirklichung dieser Schutzfunktion umfaßt die Trennwand einzelne Teilwände, die beweglich miteinander verbunden sind, wobei die beweglichen Verbindungen zwischen den einzelnen Teilwänden so ausgebildet sind, daß sie bei Überschreitung einer auf die Trennwand wirkenden Kraft nachgeben. Infolge der einzelnen miteinander verbundenen Teilwände wirkt das optische Erscheinungsbild der Trennwände recht "unruhig", wobei ein charakteristisches Dekor des Flugzeugbetreibers nur schwach zur Geltung kommen kann. Sollen mit dem Kabinenbetrieb zusammenhängende Einrichtungen wie Geräte, Anzeige- und Hinweisschilder, Magazinstaufächer, Literaturtaschen und dergleichen in eine derartige Trennwand integriert werden, so ergeben sich Probleme infolge der geringen Wandstärke der Trennwand. In diesem Falle werden, zusätzliche Maßnahmen zur Kapselung bzw. Verkleidung dieser Geräte erforderlich. Die Trennwände der vorbeschriebenen Art erfordern damit aufwendige Maßnahmen zur Anordnung aufzunehmender Geräte und sind im übrigen bezüglich ihrer optischen Wirkung sehr verbesserungsbedürftig. Hinweise, die zu einer Trennwand von vorteilhaftem Aussehen mit neuartigen Möglichkeiten der Integration von Geräten führen, insbesondere wenn die vorgenannte Schutzfunktion nicht erforderlich ist, sind dieser Druckschrift nicht zu entnehmen.

Demgemäß liegt der Erfindung die Aufgabe zugrunde, eine gattungsgemäße Trennwand so auszubilden, daß ein Einbau von Geräten auf einfache Weise möglich ist, daß die Trennwand durch eine einfache zweckmäßige Formgebung zu einer Erhöhung der optischen Wirkung eines vorhandenen Farbdekors beiträgt und in einem rationellen Fertigungsablauf herstellbar ist.

Diese Aufgabe wird bei einer gattungsgemäßen Trennwand durch die kennzeichnenden Merkmale des Patentanspruchs 1 gelöst.

Dabei ist insbesondere von Vorteil, daß Geräte auf sehr einfache Weise in die Trennwand integrierbar sind und fertigungstechnische Vorteile genutzt werden.

Vorteilhafte Weiterbildungen der Erfindung sind in den Unteransprüchen angegebenen.

Die Erfindung ist anhand der Zeichnung dargestellt und nachfolgend näher erläutert. Es zeigen
- Fig. 1: einen Querschnitt durch eine Passagierkabine,
- Fig. 2: die Ansicht A nach Fig. 1,
- Fig. 3: die Ansicht B nach Fig. 1,
- Fig. 4: eine perspektivische Darstellung einer Trennwand,
- Fig. 5: eine perspektivische Darstellung einer weiteren Trennwand und
- Fig. 6: eine perspektivische Darstellung von in eine Passagierkabine eingebauten Trennwänden.

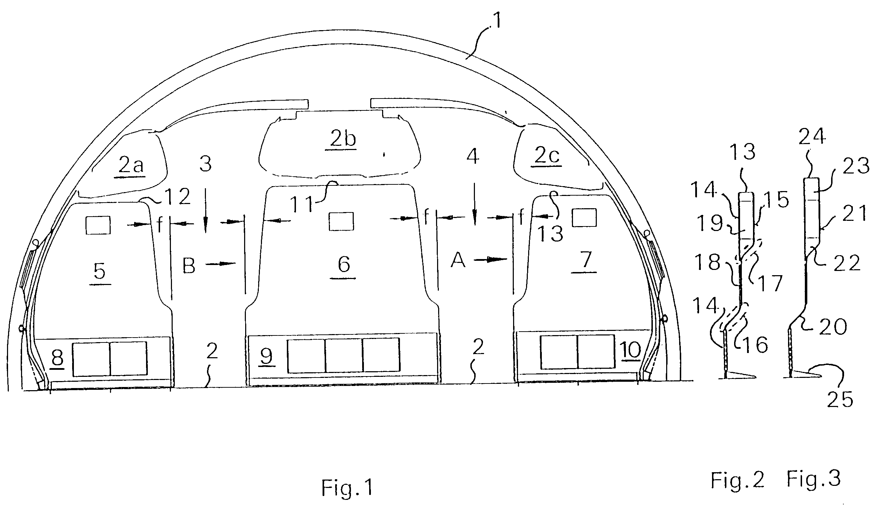

Fig. 1 zeigt einen in Flugrichtung gesehenen Querschnitt durch eine Passagierkabine mit der Rumpfstruktur 1, dem Kabinenboden 2 und den Hutablagen 2a,2b,2c. Die Sitze einer Sitzreihe sind auf drei Sitzgruppen verteilt, so daß zwei Längsgänge 3 und 4 entstehen. In dem gezeigten Querschnitt befinden sich drei erfindungsgemäße Trennwände 5,6 und 7. Diese Trennwände 5,6,7, deren Rückseiten hier in der Ansicht erscheinen, sind im unteren Teil ihres jeweiligen Sockelbereiches 8,9,10 auf ähnliche Weise wie die Passagiersitze über Sitzschienen lösbar mit den Längsträgern des Fußbodens verbunden. Alle Trennwände 5,6,7 erstrecken sich in vertikaler Richtung vom Fußboden 2 bis in die Nähe der Hutablagen 2a,2b,2c. Die mittlere Trennwand 6 mit einer ersten und einer zweiten seitlichen Umrißkante hat in ihrem Sockelbereich 9 die größte Breite, die sich durch die Breite der Gänge 3 und 4 ergibt.

In ihrem oberen Bereich zeigen die seitlichen Umrißkanten eine gegenüber dem Sockelbereich 9 in stetigem Verlauf nach oben anwachsende Zurücksetzung f. Damit verjüngt sich die Trennwand 6 bis zu ihrer oberen Umrißkante 11 hin. Im Gegensatz zu der Trennwand 6, die einen symmetrischen Umriß zeigt, sind die an den Seiten des gezeigten Kabinenquerschnitts angeordneten Trennwände 5,6 von unsymmetrischer Gestalt. Hier zeigt jeweils nur eine erste jeweils einem Gang 3,4 zugewandte seitliche Umrißkante eine nach oben stetig anwachsende Zurücksetzung bis sie jeweils in die obere Umrißkante 12 bzw. 13 übergeht. Die der Rumpfstruktur 1 zugewandten zweiten seitlichen Umrißkanten der Trennwände 5 und 7 sind jedoch der Krümmung der Kabinenwandung angepaßt und zeigen daher einen bogenförmigen Verlauf. Im Falle anderer Anordnungen der Längsgänge ist die Ausbildung der Trennwände entsprechend. Infolge der Zurücksetzungen f ergibt sich eine hinreichende Übersichtlichkeit der Kabine.

Fig. 2 zeigt die Seitenansicht der Trennwand 7. Diese besteht aus zwei flächenartigen Elementen, nämlich aus einer unteren Teilwand 14 und einer oberen Teilwand 15, die jeweils etwa in der Mitte ihrer vertikalen Erstreckung einen horizontal verlaufenden Versatz 16 bzw.17 aufweist, in dem die Wandung schräg verläuft, wobei die Übergänge gerundet sind. Beide Teilwände 14,15 sind in einem Überlappungsbereich 18 fest miteinander verbunden, wozu beispielsweise Schraub- oder Klebverbindungen in Betracht kommen. Die gesamte Trennwand weist daher zwei Bereiche mit je einem Versatz auf. Da die betreffenden Wandbereiche hier jeweils im gleichen Richtungssinne versetzt sind, ergibt sich eine funktionelle Schrägstellung der Trennwand 6. Diese funktionelle Schrägstellung der Trennwand verläuft im Bild von links unter nach rechts oben und eröffnet aufgrund des Versatzes der unteren Teilwand 14 neue Möglichkeiten der Sitzanordnung.

Optisch wird der Eindruck einer schrägen Wand dadurch vermieden, daß weite Teile der Wandfläche nach wie vor vertikal ausgerichtet sind. Da sich die untere Teilwand 14 bis zur Oberkante 13 der Trennwand 7 erstreckt, ergibt sich in deren oberem Bereich ein Zwischenraum 19 der zur Aufnahme beliebiger Einbauten nutzbar ist.

Fig. 3 zeigt eine Seitenansicht der Trennwand 6, wobei diese jedoch in ihre Einzelteile zerlegt ist. Auch diese Trennwand 6 besteht wieder aus einer unteren und einer oberen Teilwand 20 bzw.21, die so bemessen sind, daß wieder ein Zwischenraum entsteht. Die seitlichen Wandelemente 22 und 23 lassen eine seitliche Öffnung von rechteckiger Form offen, wobei ein oberes Wandelement 24 den betreffenden Zwischenraum nach oben abschließt. Dabei wird eine schräge Fußstütze 25 zur bodenseitigen Befestigung der Trennwand genutzt. Fertigungstechnische Vorteile ergeben sich dadurch, daß alle Trennwände aus zwei Teilwänden bestehen. Dies ist vorteilhaft, wenn beispielsweise eine Trennwand herzustellen ist, die keinen Zwischenraum 19 aufweisen soll. In diesem Falle wird eine untere Teilwand 20 verwendet, die sich nach oben nur bis zum oberen Ende des Überlappungsbereiches erstreckt. Hierdurch erhält man eine neue Variante der Trennwand, wozu die obere Teilwand 21 in unveränderter Form übernommen wird. Weitere fertigungstechnische Vorteile ergeben sich, wenn der Versatz beider Teilwände geometrisch identisch ist. Hierdurch sind die obere und die untere Teilwand mit der gleichen Form herstellbar. Ein weiterer Vorteil ergibt sich, wenn beide Teilwände von gleicher Wandstärke sind. Hierdurch wird die Lagerhaltung vereinfacht.

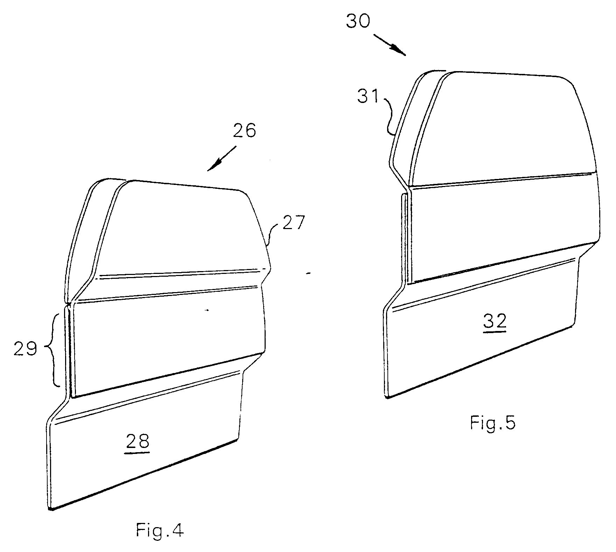

Fig. 4 zeigt eine perspektivische Darstellung einer mittleren Trennwand 26 mit einer oberen Teilwand 27 und einer unteren Teilwand 28, die in ihrem Überlappungsbereich 29 miteinander verbunden sind. Hier stimmt der Richtungssinn des jeweiligen Versatzes überein.

Fig. 5 zeigt nun eine perspektivische Darstellung einer weiteren Trennwand 30, bestehend aus einer oberen Teilwand 31 und einer unteren Teilwand 32, die jetzt jedoch so zusammengestellt und verbunden sind, daß die Richtungen des jeweiligen Versatzes unterschiedlich sind. Auch diese aufgrund der zweiteiligen Ausbildung der Trennwände mögliche Ausgestaltung ist aus Fertigungsgründen vorteilhaft.

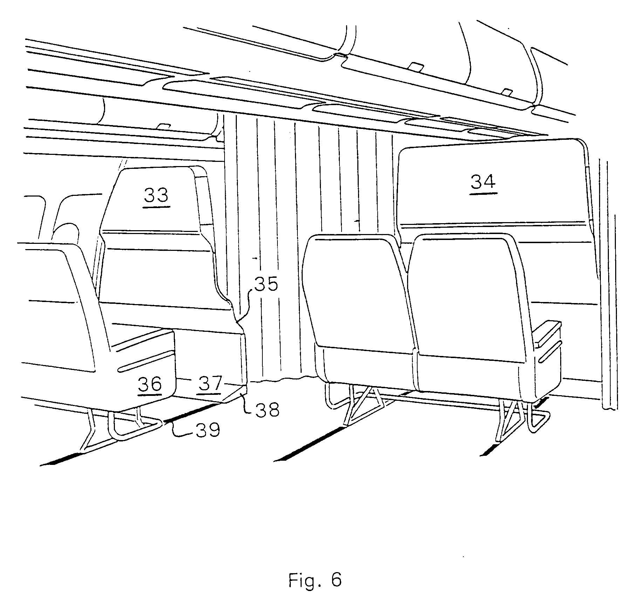

Fig. 6 zeigt eine perspektivische Darstellung von in eine Passagierkabine eingebauten Trennwänden 33 und 34. Es ist erkennbar, daß sich aufgrund des Versatzes 35 der unteren Teilwand der Trennwand 33 eine größere Beinfreiheit für eine den Passagiersitz 36 benutzende Person ergibt. Man erkennt weiterhin, daß die Fußstütze 37 mit einem Beschlag 38 in Verbindung steht, der der Befestigung der Trennwand 33 an einer Sitzschiene 39 dient.

## Patentansprüche

1. Trennwand für die Kabine eines Passagierflugzeuges zur optischen Abtrennung unterschiedlicher Kabinenbereiche, bestehend aus Teilwänden, mit einem horizontalen Versatz und einer ersten und einer zweiten seitlichen Umrißkante, wobei die erste seitliche Umrißkante eine gegenüber dem Sockelbereich in stetigem Verlauf nach oben anwachsende Zurücksetzung aufweist und die zweite seitliche Umrißkante ebenfalls eine Zurücksetzung bzw. einen bogenförmigen Verlauf zeigt und die Trennwand auf übliche Weise über Sitzschienen lösbar mit den Längsträgern des Fußbodens verbunden ist, **dadurch gekennzeichnet,** daß die Trennwand aus einer unteren Teilwand (14) und einer oberen Teilwand (15) besteht, wobei beide Teilwände (14,15) in einem Überlappungsbereich (16) fest miteinander verbunden sind und der horizontal verlaufende Versatz jeweils etwa in der Mitte der vertikalen Erstreckung der betreffenden Teilwand (14,15) angeordnet ist.

2. Trennwand nach Anspruch 1,
**dadurch gekennzeichnet,** daß der jeweilige Versatz der Teilwände (14,15) im gleichen Richtungssinne verläuft.

3. Trennwand nach Anspruch 1,
**dadurch gekennzeichnet,** daß der jeweilige Versatz der Teilwände (14,15) in unterschiedlichenm Richtungssinne verläuft.

4. Trennwand nach Anspruch 2 oder 3,
**dadurch gekennzeichnet,** daß der Versatz beider Teilwände (14, 15,27,28,31,32) von identischer Geometrie ist.

5. Trennwand nach einem der Ansprüche 2 bis 4,
**dadurch gekennzeichnet**, daß sich die untere Teilwand (14) zur Bildung eines Zwischenraumes bis zur Oberkante der oberen Teilwand (15,27,31) erstreckt.

6. Trennwand nach einem der Ansprüche 2 bis 5,
**dadurch gekennzeichnet**, daß die Teilwände (14, 15,27,28,31,32) von gleicher Wandstärke sind.

## Claims

1. Partition wall for the cabin of a passenger aircraft for visually dividing-off different areas of the cabin, the said partition wall consisting of partial walls with a horizontal offset portion and a first and second lateral outline edge, the first lateral outline edge having a set-back portion which increases in a steady development in the upward direction in relation to the base region, the second lateral outline edge likewise exhibiting a set-back portion or an arcuate development and the partition wall being detachably connected to the longitudinal bearers of the floor in the usual manner via seat rails, **characterised in that** the partition wall consists of a lower partition wall (14) and an upper partition wall (15), while the two partition walls (14, 15) are fixedly connected to one another in an overlapping region (16) and the horizontally running offset portion is disposed, in each case, approximately in the centre of the vertical extent of the partial wall (14, 15) in question.

2. Partition wall according to claim 1,
**characterised in that** the respective offset portions of the partition walls (14, 15) run in the same directional sense.

3. Partition wall according to claim 1,
**characterised in that** the respective offset portions of the partition walls (14, 15) run in different directional senses.

4. Partition wall according to claim 2 or 3
**characterised in that** the offset portions of the two partition walls (14, 15, 27, 28, 31, 32) are of identical geometry.

5. Partition wall according to one of claims 2 to 4,
**characterised in that**, for the purpose of forming an intervening space, the lower partial wall (14) extends as far as the upper edge of the upper partial wall (15, 27, 31).

6. Partition wall according to one of claims 2 to 5,
**characterised in that** the partial walls (14, 15, 27, 28, 31, 32) are of identical wall thickness.

## Revendications

1. Cloison de séparation pour la cabine d'un avion de passagers destinée à la séparation visuelle de différentes zones de la cabine, constituée de parties de cloison avec un déport horizontal et une première et une deuxième arêtes de profil latérales, la première arête de profil latérale présentant par rapport à la zone de socle un décalage vers l'arrière s'agrandissant continuellement de bas en haut et la deuxième arête de profil latérale présentant également un décalage vers l'arrière, c'est-à-dire une allure en forme d'arc et la cloison de séparation étant reliée de manière séparable aux longerons du plancher généralement au moyen de rails d'appui, caractérisée en ce que la cloison de séparation est constituée d'une partie de cloison inférieure (14) et d'une partie de cloison supérieure (15), les deux parties de cloison (14, 15) étant reliées l'une à l'autre dans une zone de chevauchement (16) et le déport horizontal se trouvant respectivement plus ou moins au centre du plan vertical de la partie de cloison (14, 15) concernée.

2. Cloison de séparation suivant la revendication 1, caractérisée en ce que le déport respectif des parties de cloison (14, 15) a lieu dans la même direction.

3. Cloison de séparation suivant la revendication 1, caractérisée en ce que le déport respectif des parties de cloison (14, 15) a lieu dans des directions différentes.

4. Cloison de séparation suivant la revendication 2 ou 3, caractérisée en ce que le déport des deux parties de cloison (14, 15, 27, 28, 31, 32) présente une géométrie identique.

5. Cloison de séparation suivant l'une quelconque des revendications 2 à 4, caractérisée en ce que la partie de paroi inférieure (14) s'étend jusqu'au bord supérieur de la partie de cloison supérieure (15, 27, 31) afin de former un espace intermédiaire.

6. Cloison de séparation suivant l'une quelconque des revendications 2 à 5, caractérisée en ce que les parties de cloison (14, 15, 27, 28, 31, 32) présentent la même épaisseur de cloison.
